# EUROPEAN PATENT SPECIFICATION

(11) **EP 3 685 715 B1**
(45) Date of publication and mention of the grant of the patent: **30.11.2022**
(21) Application number: 19153510.3
(22) Date of filing: 24.01.2019
(51) Int. Cl.: A47J 31/44, B29C 45/37, B29C 33/42, B08B 17/06

(54) **BEVERAGE DISPENSER WITH SELF-CLEANING COMPONENTS**
GETRÄNKESPENDER MIT SELBSTREINIGENDEN KOMPONENTEN
DISTRIBUTEUR DE BOISSONS COMPRENANT DES COMPOSANTS AUTONETTOYANTS

(43) Date of publication of application: 29.07.2020
(73) Proprietor: Société des Produits Nestlé S.A., 1800 Vevey (CH)
(72) Inventor: CALDERONE, Roberto Angelo, 1170 Aubonne (CH); REUST, Alexis, 1010 Lausanne (CH); KATRANTZIS, Ioannis, 4054 Basel (CH); JOHANSSON, Alicia, 2100 Kobenhavn O (DK); THEODOR, Nielsen, 2200 Kobenhavn N (DK); THAMDRUP, Lasse Hojlund Eklund, 2610 Rodovre (DK)
(74) Representative: Ducreux, Marie

(56) References cited:
- WO-A1-2009/028745
- WO-A1-2013/131525
- WO-A2-2012/048870
- WO-A2-2012/061753
- US-A1- 2013 330 501

## Description

### Field of the invention

The present invention relates to beverage dispensers, in particular dispensing hot beverages.

### Background of the invention

Beverage dispensers are commonly used to dispense beverages like coffee, tea, chocolate, milk. The beverages can be simply stored in the dispenser and dispensed therefrom or in more complex machines, the beverage can be prepared inside the machine before being dispensed.

Beverage dispensers must be regularly cleaned in order to avoid any hygiene issue and to provide an appealing aspect for consumers. Cleaning concerns internal parts of the dispenser and external parts of the dispenser as a part of dirtiness is due to the liquids circulating inside the dispenser and another part to liquids splashing outside the dispenser. The operation of cleaning beverage dispensers is time consuming and must be frequently repeated. During the cleaning, the dispenser cannot be operated and the presence of an operator is necessary.

Different solutions have been proposed to facilitate cleaning operations. One consists in providing beverage dispensers with components presenting self-cleaning properties and/or water repellent property. Since beverages are usually essentially made of water, the water repellant property of beverage dispenser components in contact with liquids prevents liquids from adhering, stagnating and drying on the surfaces of the dispenser. Liquids flow easily without being retained and this source of dirtiness is reduced.

The water repellent or hydrophobic property of the components can be obtained through different technologies. Chemical coatings have been used but their use can be unhealthy. An interesting technology is nano-imprint lithography which consists in imprinting micro- and nanostructures on components surfaces. WO 2013/131525 describes such types of structures and a method to imprint them : surfaces of injection molded polymers with such structures present very good hydrophobic property, water drops rolling off these surfaces very easily.

It has been observed that these structures provide efficient hydrophobicity with water used at ambient or cold temperature, yet, if water is hot, the hydrophobicity property decreases, and if water is mixed with a fat component, such as milk or chocolate beverages do, the hydrophobicity decreases even more. As a result the self-cleaning advantage of these structures does not exist in machines dispensing hot beverages like coffee, tea, and even fat beverages like chocolate or milk.

There is a need for providing beverage dispenser components with surfaces presenting hydrophobic property whatever the temperature of the beverage in contact with the components, that is either cold, ambient or hot.

### Summary of the invention

In a first aspect of the invention, there is provided a component configured for handling a liquid and/or able to be contacted by a liquid for use in a beverage dispensing apparatus, said component comprising at least one hydrophobic liquid contact surface portion, wherein said hydrophobic liquid contact surface portion presents a micro- and nano-meter hierarchical patterned structure, said structure comprising :
- homogeneously distributed micrometre-sized pillars, and
- homogeneously distributed nanometre-sized pillars at the upper surface of the micrometre-sized pillars, and
- nanometre-sized protrusions at the upper surface of the nanometre-sized pillars, said protrusions being positioned in a non-periodic, irregular pattern.

The beverage dispensing apparatus can be configured for storing a ready to drink beverage and dispense one single dose of this beverage.

Alternatively the beverage dispensing apparatus can be configured to prepare one single dose of beverage and to dispense it. The apparatus is not limited in term of type of beverage preparation.

The apparatus can prepare the beverage from beverage ingredient and can comprise a storing container for the ingredient and a dosing device of the ingredient. In one embodiment, this apparatus can comprise a chamber to mix a dose of ingredient with water before dispensing the resulting beverage. In another embodiment, this apparatus can comprise a mixing nozzle to introduce a jet of water in a cup containing a dose of ingredient. The apparatus can prepare the beverage from a single dose capsule comprising a beverage ingredient.

The apparatus can prepare a foamed beverage from a flat beverage, such as milk and can comprise a foaming device.

The component configured for handling a liquid can be a water tank and the hydrophobic liquid contact surface portion can be positioned at least on a lateral side wall of the tank.

Consequently, any water drop at the lateral side wall, either internal or external wall, easily falls down from the wall. Traces due to dried water drops are avoided.

The component configured for handling a liquid can be a tube configured for dispensing water or beverage and at least a part of the internal surface of the tube presents a hydrophobic liquid contact surface. Any tube dispensing water from the water supply or dispensing beverage from a beverage mixing chamber, a brewing chamber or a capsule can be concerned. The tube can be a nozzle.

The component able to be contacted by a liquid can be an area configured for holding a drinking container. During dispensing of the beverage in the drinking container, drops of beverage can splash and fall on the surfaces of this cup holding area.

Whatever the function of the component, said component comprises at least one hydrophobic liquid contact surface portion.

Preferably, this portion with hydrophobic property corresponds to the part of the component in contact with liquid during the beverage preparation and/or dispensing.

The hydrophobic property is provided by the design of the surface of said liquid contact surface portion. Precisely, this surface presents a micro- and nano-meter hierarchical patterned structure with three levels of patterns.

According to preferred embodiments, the micro- and nano-meter hierarchical patterned structure comprises :
- homogeneously distributed micrometre-sized pillars presenting a height of at least 3 µm, preferably comprised between 5 and 50 µm,
- homogeneously distributed nanometre-sized pillars at the upper surface of the micrometre-sized pillars presenting a height comprised between 500 nm and 1000 nm, preferably comprised between 600 and 800 nm, and
- nanometre-sized protrusions at the upper surface of the nanometre-sized pillars presenting a height comprised between 50 and 400 nm.

The **first level of the structure** comprises micrometre-sized pillars.

These micrometre-sized pillars present a shape and an supper surface configured to define a support for the homogeneously distributed nanometre-sized pillars.

These micrometre-sized pillars usually present a relatively homogeneous cross section all along their height and the cross section can present any shape (round, oval, square, rectangular, hexagonal). Alternatively, the cross section of the pillars can vary along the height. For example the pillars can present the shape of half spheres, the cross section of the pillar decreasing from the base to the top.

Preferably the micrometre-sized pillars are parallelepipedic or round pillars.

These pillars are homogeneously distributed. Preferably they are homogeneously distributed along lines, two next lines being either aligned (array distribution) or offset (hexagonal distribution). Preferably the lines are aligned (array distribution).

These micrometre-sized pillars can present a width comprised between 3 and 70 µm, preferably between 10 and 60 µm. The width represents the length of the side in case of a square shape or the diameter in case of a cylindrical shape. Preferably, the width represents 1/3 to 1 time the height.

These micrometre-sized pillars can be separated one from the others by a pitch of at most 8 times the width of said pillar. The pitch is the distance from the centre of one pillar to the centre of the next pillar.

The **second level of the structure** comprises homogeneously distributed nanometre-sized pillars present at the upper surface of the micrometre-sized pillars.

These nanometre-sized pillars present a shape and an supper surface configured to define a support for the nanometre-sized protrusions.

These nanometre-sized pillars usually present a relatively homogeneous cross section all along their height and the cross section can present any shape (round, oval, square, rectangular, hexagonal). Alternatively, the cross section of the pillars can vary along the height. For example the pillars can present the shape of half spheres, the cross section of the pillar decreasing from the base to the top.

Preferably the nanometre-sized pillars are round pillars.

These pillars are homogeneously distributed. Preferably they are homogeneously distributed along lines, two next lines being either aligned (array distribution) or offset (hexagonal distribution). Preferably the lines are aligned (array distribution).

These nanometre-sized pillars can present a width comprised between 400 and 1000 nm, preferably between 400 and 700 nm. Preferably, the width represents 1/5 to 1 time the height.

These nanometre-sized pillars can be separated one from the others by a pitch of at most 6 times the width of said pillar. The pitch is the distance from the centre of one pillar to the centre of the next pillar.

The **third level of the structure** comprises nanometre-sized protrusions at the upper surface of the nanometre-sized pillars. Contrary to the nanometre-sized pillars, the protrusions do not present well defined shapes. These protrusions are positioned in a non-periodic, irregular pattern at the upper surface of the nanometre-sized pillars.

These nanometre-sized protrusions present heights comprised between 10 and 400 nm and said height is inferior to the height of the nanometre-sized pillars on which upper surface they protrude. The nanometre-sized protrusions present a minimum density of 10⁵ protrusions/mm², preferably within an interval of 10⁵ to 10⁸ protrusions/mm².

Typically, the nanometer-sized protrusions may have an aspect ratio (A), i.e. height / width of structure on average, of minimum 10, 1, 0.1 or 0.01. Alternatively, the nanometer-sized protrusions may have an aspect ratio (A), i.e. height / width of structure on average, of maximum 10, 1, 0.1 or 0.01.

It is to be understood that the density is calculated on an average basis as will be appreciated by a person working with micro-technologies. The concept of a non-period, irregular pattern is to be understood by the skilled person as seen on or viewed on a nanometer scale, e.g. using scanning electron microscopy (SEM) or an atomic force microscopy (AFM). Using for example a pixel size of approximately 2-20 nm in SEM, the master structure will be shown to have a protrusion distribution with such a pattern.

Preferably the component configured for handling a liquid and/or able to be contacted by a liquid is made of a plastic polymer and is produced by injection molding and the micro- and nano-meter hierarchical patterned structure is imprinted at the surface of the component during the injection molding operation.

Generally the plastic polymer the component is made of is a plastic polymer not charged with fibres. Actually, the presence of fibres does not enable the molding of the patterned surface as desired. The polymer is preferably polypropylene or polyamide.

In one embodiment, the component can be a water tank and at least one internal lateral side wall of the tank presents at least one hydrophobic liquid contact surface portion such as described above.

In another embodiment, the component can be a tube and at least a part of the internal surface of the tube presents a hydrophobic liquid contact surface such as described above. This tube can be configured for dispensing water, milk or any ready-to drink or just prepared beverage.

This tube can be a nozzle or needle.

This tube can be configured for dispensing a beverage prepared in an upstream mixing chamber or in an upstream beverage capsule.

This tube can be a mixing nozzle configured to receive and mix together a diluent and at least one concentrate before dispensing the mixture in a cup.

This tube can be a connector between different devices of a beverage apparatus such as liquid tank, pump, mixing chamber, capsule holder, cup holder, drip tray.

In another embodiment, the component can be a cup holder and at least a part of the external surface of the cup holder presents at least one hydrophobic liquid contact surface portion such as described above.

In a second aspect, there is provided a beverage dispensing apparatus comprising at least one component such as described above.

In a third aspect, there is provided a use of a hydrophobic liquid contact surface portion presenting a micro- and nano-meter hierarchical patterned structure in at least one component for handling a liquid and/or able to be contacted by a liquid of a beverage dispensing apparatus, said structure comprising :
- homogeneously distributed micrometre-sized pillars, and
- homogeneously distributed nanometre-sized pillars at the upper surface of the micrometre-sized pillars, and
- nanometre-sized protrusions at the upper surface of the nanometre-sized pillars, said protrusions being positioned in a non-periodic, irregular pattern.

This micro- and nano-meter hierarchical patterned structure presents the same preferred features as mentioned above.

Preferably, the micro- and nano-meter hierarchical patterned structure comprises :
- homogeneously distributed micrometre-sized pillars presenting a height of at least 3 µm, preferably comprised between 5 and 50 µm,
- homogeneously distributed nanometre-sized pillars at the upper surface of the micrometre-sized pillars presenting a height comprised between 500 nm and 1000 nm, preferably comprised between 600 and 800 nm, and
- nanometre-sized protrusions at the upper surface of the nanometre-sized pillars presenting a height comprised between 50 and 400 nm.

The hydrophobic liquid contact surface portion is used in at least one component for handling a hot liquid and/or able to be contacted by a hot liquid for use in a beverage dispensing apparatus.

The hot liquid can be hot water, coffee, tea chocolate, milk.

According to a fourth aspect, there is provided a plastic injection mold of a component such as described above comprising a patterned surface for moulding the hydrophobic liquid contact surface portion presenting the micro- and nano-meter hierarchical patterned structure.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures wherein :
- Figures 1a-1c illustrates a first micro- and nano-meter hierarchical patterned structure used as a hydrophobic liquid contact surface portion according to the invention,
- Figure 2 illustrates a second micro- and nano-meter hierarchical patterned structure used as a hydrophobic liquid contact surface portion according to the invention,
- Figure 3 illustrates a third micro- and nano-meter hierarchical patterned structure used as a hydrophobic liquid contact surface portion according to the invention,
- Figure 4 illustrates a micro- and nano-meter hierarchical patterned structure used as a hydrophobic liquid contact surface portion according to the state of the art,
- Figure 5 illustrates a beverage dispensing apparatus comprising components configured for handling a liquid and/or able to be contacted by a liquid,
- Figure 6 illustrates a preparation chamber that can be used in the apparatus of Figure 5,
- Figure 7 illustrates water nozzles that can be used in the apparatus of Figure 5.

### Detailed description of the drawings

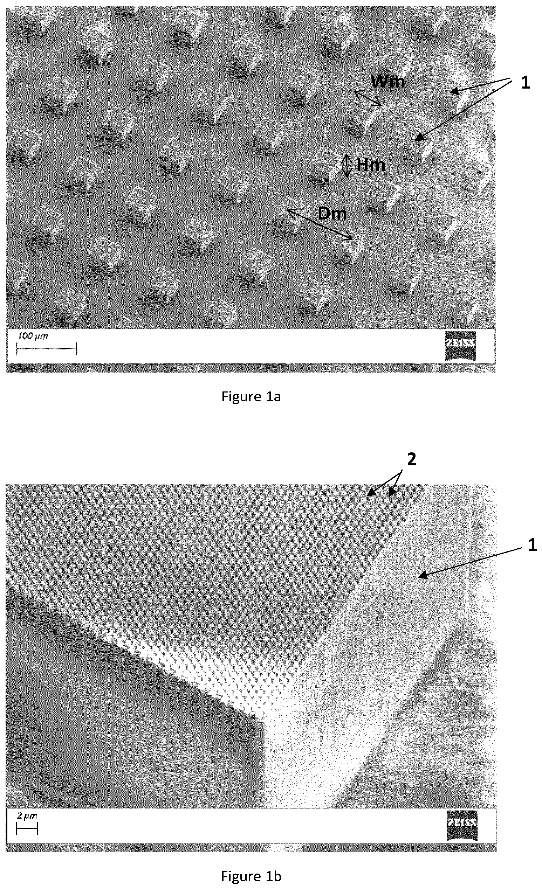

**Figures 1a-1c** illustrate a first micro- and nano-meter hierarchical patterned structure used as a hydrophobic liquid contact surface portion in the components of beverage dispensing apparatuses according to the invention. In order to test the property of the structure, said structure was manufactured in polypropylene foil. Ni stamps presenting the reverse design were used for embossing the structure in the plastic foil. The process for manufacturing the Ni stamps and embossing polypropylene plastic is known and described in WO 2013/131525.

Figures 1a-1c show SEM (Scanning Electron Microscope) images of the hierarchical structure. In these images, the view are tilted meaning that, depending on the angle taken for the view, the pillars and protrusions can appear slightly larger than in the reality or of smaller height than in the reality.

**Figure 1a** is a tilted SEM image showing the micrometre-sized square pillars 1 homogeneously distributed along a matrix of lines and columns. The pillars are identical and present a height Hₘ of 40 µm and a width Wₘ of 40 µm. The pillars are separated one from the others by a pitch Dₘ (distance centre to centre) of 115 µm.

**Figure 1b** is a magnified tilted SEM view of one pillar of Figure 1a : it illustrates nanometre-sized pillars 2 positioned at the upper surface of the micrometre-sized pillars 1. These nanometre-sized pillars are homogeneously distributed along a matrix of lines and columns. Next lines are offset one to the other. The pillars are identical.

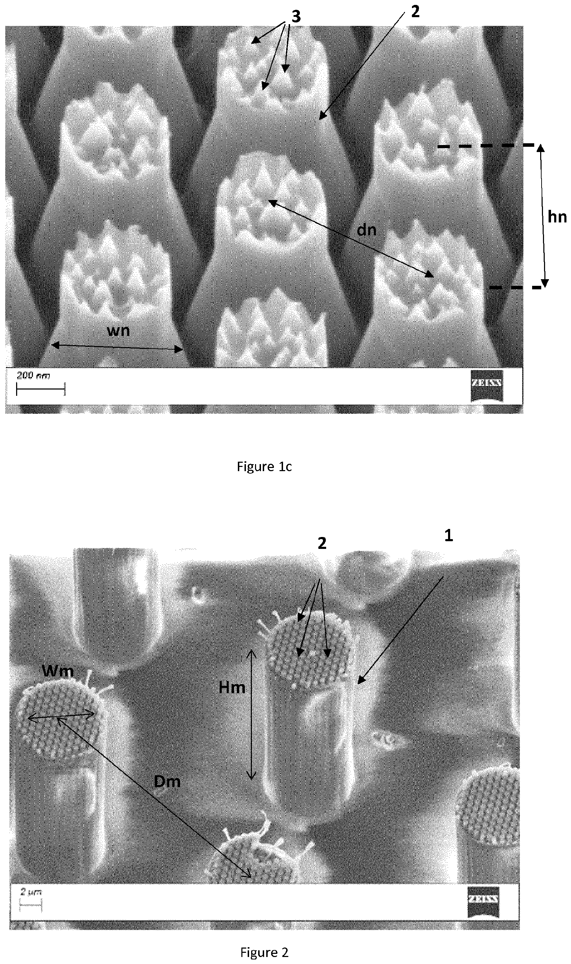

**Figure 1c** is a magnified photo of several nano-sized pillars of Figure 1b : the nano-sized pillars 2 present a round section with a height hₙ of 750 nm. The pillars are slightly conical, the round shape at the base stretching at the top of the pillars. The width wₙ at the base is of 500 nm. The pillars are separated one from the others at the base by a maximal pitch dₙ of 750 nm.

The photo of Figure 1c shows the upper surface of the nano-sized pillars. The upper surface comprises nanometre-sized protrusions 3 : these nanometre-sized protrusions present irregular heights, yet these heights remain comprised between 100 and 400 nm. The density of these nanometre-sized protrusions at the upper surface of the pillars is of about 10⁷ protrusions/mm². These protrusions are positioned in a non-periodic, irregular pattern.

**Figure 2** is a photo showing a second micro- and nano-meter hierarchical patterned structure used as a hydrophobic liquid contact surface portion in the components of beverage dispensers according to the invention.

Figure 2 is a magnified tilted SEM view of cylindrical micrometre-sized pillars 1 with cylindrical nano-sized pillars 2 rising from their top surface. These micrometre-sized pillars 1 are homogeneously distributed along a matrix of lines and columns. Next lines are offset one to the other. The pillars are identical. The nanometre-sized protrusions at the top of the nano-sized pillars 2 are not visible in the photo at this magnification, yet they are present. These nanometre-sized protrusions present the same features as those present in the structure of Figure 1c.

The micrometre-sized cylindrical pillars 1 are homogeneously distributed along a matrix of lines and columns. The pillars 1 are identical and present a height Hₘ of 20 µm and a width Wₘ of 5 µm. The pillars are separated one from the others by a pitch Dₘ (distance centre to centre) of 15 µm.

The nanometre-sized cylindrical pillars 2 are homogeneously distributed along a matrix of lines and columns. The pillars 2 are identical and present a height hₙ of 750 nm and a width wₘ of 500 nm. The pillars are separated one from the others by a pitch dₙ (distance centre to centre) of 750 nm.

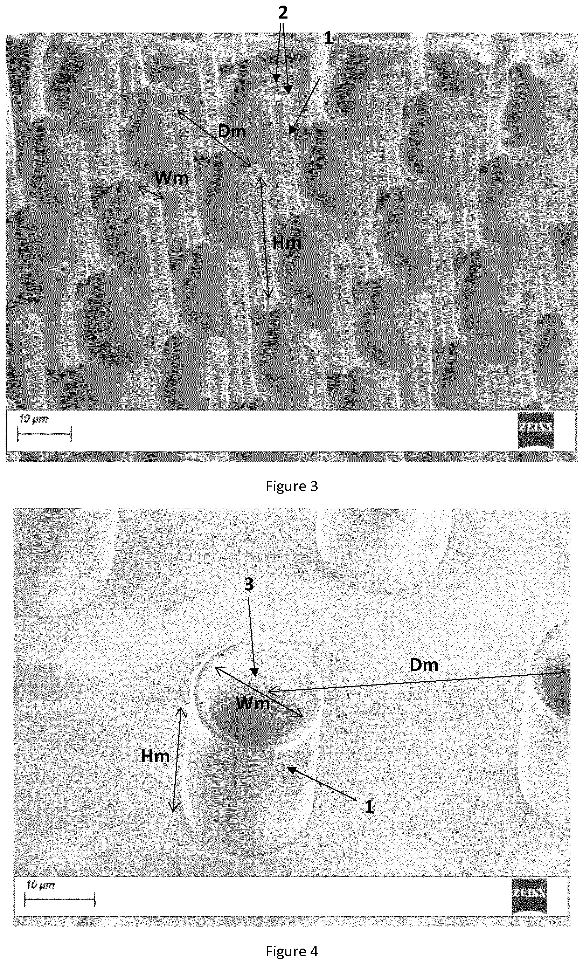

**Figure** 3 is a photo showing a third micro- and nano-meter hierarchical patterned structure used as a hydrophobic liquid contact surface portion in the components of beverage dispensers according to the invention.

Figure 3 is a magnified tilted SEM view of cylindrical micrometre-sized pillars 1 with slightly visible cylindrical nano-sized pillars 2 rising from their top surface. These micrometre-sized pillars 1 are homogeneously distributed along a matrix of lines and columns. Next lines are offset one to the other. The pillars are identical. The nanometre-sized protrusions at the top of the nano-sized pillars 2 are not visible in the photo at this magnification, yet they are present. These nanometre-sized protrusions present the same features as those present in the structure of Figure 1c.

The micrometre-sized cylindrical pillars 1 are homogeneously distributed along a matrix of lines and columns. The pillars 1 are identical and have been manufactured from an Ni stamp presenting a reverse design to produce pillars 1 presenting a height Hm of 30 µm and a width Wm of 5 µm. Yet, during the step of removing the propylene foil from the Ni stamp, pillars 1 were stretched resulting in pillars with a slightly higher final height. Pillars are separated one from the others by a pitch Dm (distance centre to centre) of 15 µm.

The nanometre-sized cylindrical pillars 2 are homogeneously distributed along a matrix of lines and columns. The pillars 2 are identical and, similarly to pillars 1 have been stretched during the manufacturing step ; the Ni stamp was configured to produce pillars 2 of a height hn of 750 nm and a width wm of 500 nm. The pillars are separated one from the others by a pitch dn (distance centre to centre) of 750 nm.

**Figure 4** is a photo showing a micro- and nano-meter hierarchical patterned structure used as a hydrophobic liquid contact surface portion according to the state of the art.

Figure 4 is a tilted SEM image showing the micrometre-sized round pillars 1 homogeneously distributed along a matrix of lines and columns in an hexagonal array. All the pillars are identical and present a height Hₘ of 16 µm and a diameter Wₘ of 18 µm. The pillars are separated one from the others by a pitch Dₘ of 50 µm.

Nanometre-sized protrusions 3 at the top of the micro-sized pillars 1 are not visible in the illustrated figure at this magnification, yet they are present. Nanometre-sized protrusions presenting a height comprised between 200 and 400 nm at a density of 10⁷ protrusions/mm² were measured. These protrusions are positioned in a non-periodic, irregular pattern.

The hydrophobic properties of the foils of plastic describes in Figures 1a-1c, 2, 3 and 4 were tested with hot beverages.

The procedure of the test consisted in :
- cleaning the foil with ethanol and then deionized water,
- positioning the foil according to an inclined angle of 5° or 45° with horizontal, that is reproducing a very small inclination inside a component of a beverage dispenser,
- depositing manually a drop (volume of 50 µl) of hot beverage on the foil. The hot beverage presented a temperature of 70 °C and consisted in water, coffee, skimmed milk, fat milk or chocolate,
- observing the movement of the drop on the surface of the foil.

| **Type of patterned structure** | **Result of the test** |
|---|---|
| **According to the invention** | |
| micro + nano + nano-meter hierarchical patterned structure of Figures 1a-1c | - drops of hot water rolled immediately from the foil inclined at 5°, |
| | - drops of hot skimmed milk and fat milk rolled immediately from the foil if the foil was inclined by 45°. |
| | - drops of coffee and chocolate did not roll off even inclined at 45°. |
| micro + nano + nano-meter hierarchical patterned structures of Figures 2 and 3 | - drops of hot water rolled immediately from the foil inclined at 5°, |
| | - drops of hot skimmed milk, fat milk, coffee and chocolate rolled immediately from the foil if the foil was inclined by 45°. |

| **According to the prior art** | |
|---|---|
| micro + nano-meter hierarchical patterned structure of Figure 4 | - drops of hot water rolled immediately from the foil inclined at 5°, |
| | - drops of hot beverages did not roll off from the foil inclined by 45°. |

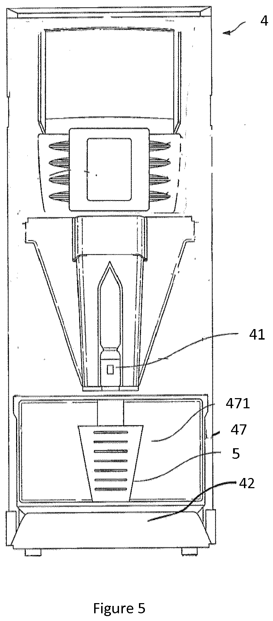

**Figure 5** illustrates a beverage dispensing apparatus 4. This apparatus dispenses beverage from a dispensing nozzle 41 in a drinking container positioned on a cup holder 42 in a receiving area 47. During beverage dispensing, drops of beverages may splash in this receiving area and on the cup holder. Beverage drops may also stay in in the dispensing nozzle 41.

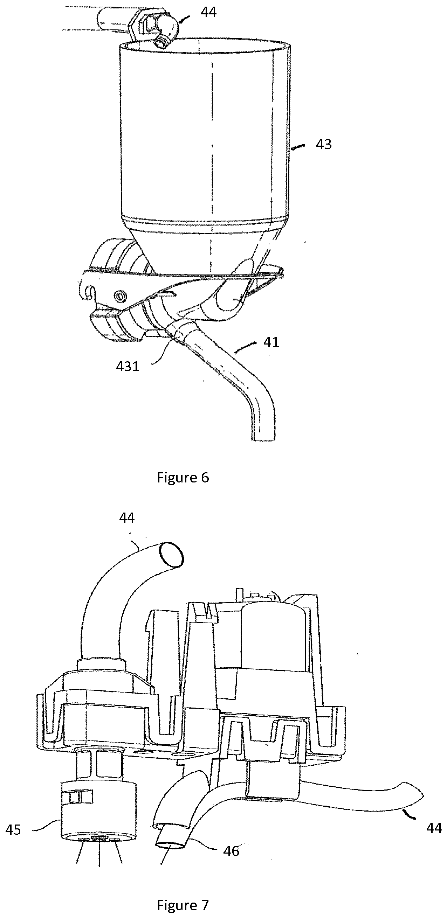

**Figure 6** illustrates a beverage preparation chamber 43 of the beverage dispensing apparatus 4. A dispensing nozzle 41 is attached to the outlet 431 of the chamber in order to dispense the beverage to the drinking container. This nozzle is difficult to clean on account of its small size. Yet it must be frequently cleaned since it is in contact with beverages which leave potential residues inside. It must be frequently replaced.

At the top of the chamber, a water supply tube 44 is provided. When hot water is supplied, scale deposit increased inside this tube requiring regular descaling. Scaling is increased by stagnation of hot water in the tube.

**Figure 7** illustrates mixing nozzles 45, 46 of a beverage dispensing apparatus. These nozzles provide hot water in a drinking cup comprising a soluble beverage ingredient. The nozzles can deliver a several jets of water or one flow of water. Whatever the form of the nozzle, the same issue of scaling exist as for the water supply tube 44 of Figure 6.

By providing hydrophobic liquid contact surface portion inside the different illustrated components, hot water and hot beverages are prevented from stagnating on the surface of the components and limit dirtiness and scaling. Theses liquids do not dry inside the components, they totally flow in the drinking container.

In the receiving area, vertical walls 471 presenting hydrophobic liquid contact surface prevent drops of hot water and hot beverages from being pinned on : the drops flows down and are collected in the cup holder that is easily cleaned.

The same principle applies in the water tank and its internal vertical walls 481.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| micro-sized pillar | 1 |
| nano-sized pillar | 2 |
| nanometre-sized protrusion | 3 |
| beverage dispensing apparatus | 4 |
| dispensing nozzle | 41 |
| cup holder | 42 |
| beverage preparation chamber | 43 |
| outlet | 431 |
| water supply tube | 44 |
| mixing nozzle | 45, 46 |
| receiving area | 47 |
| vertical wall | 471 |
| water tank | 48 |
| vertical wall | 471 |
| drinking cup | 5 |

## Claims

1. A component (41, 42, 43, 15, 46, 47, 48) configured for handling a liquid and/or able to be contacted by a liquid for use in a beverage dispensing apparatus, said component comprising at least one hydrophobic liquid contact surface portion, wherein said hydrophobic liquid contact surface portion presents a micro- and nano-meter hierarchical patterned structure, said structure comprising :
- homogeneously distributed micrometre-sized pillars (1), and
- homogeneously distributed nanometre-sized pillars (2) at the upper surface of the micrometre-sized pillars, and
- nanometre-sized protrusions (3) at the upper surface of the nanometre-sized pillars, said protrusions being positioned in a non-periodic, irregular pattern.

2. A component according to Claim 1, wherein the micro- and nano-meter hierarchical patterned structure comprises :
- homogeneously distributed micrometre-sized pillars (1) presenting a height of at least 3 µm, preferably comprised between 5 and 50 µm,
- homogeneously distributed nanometre-sized pillars (2) at the upper surface of the micrometre-sized pillars presenting a height comprised between 500 nm and 1000 nm, preferably comprised between 600 and 800 nm, and
- nanometre-sized protrusions (3) at the upper surface of the nanometre-sized pillars presenting a height comprised between 50 and 400 nm.

3. A component according to Claim 1 or 2, wherein the micrometre-sized pillars (1) of the micro- and nano-meter hierarchical patterned structure present a width comprised between 3 and 70 µm, preferably between 10 and 60 µm.

4. A component according to any one of the precedent claims, the micrometre-sized pillars (1) of the micro- and nano-meter hierarchical patterned structure are separated one from the others by a pitch of at most 8 times the width of said pillars (1).

5. A component according to any one of the precedent claims, wherein the nanometre-sized pillars (2) of the micro- and nano-meter hierarchical patterned structure present a width comprised between 400 and 1000 nm, preferably between 400 and 700 nm.

6. A component according to any one of the precedent claims, the nanometre-sized pillars (2) of the micro- and nano-meter hierarchical patterned structure are separated one from the others by a pitch of at most 6 times the width of said pillars (2).

7. A component according to any one of the precedent claims, wherein the micrometre-sized pillars (1) are parallelepipedic or round.

8. A component according to any one of the precedent claims, wherein the nanometre-sized pillars (2) are round or truncated cones

9. A component according to any one of the precedent claims, wherein the component is made of a plastic polymer and is produced by injection molding and the micro- and nano-meter hierarchical patterned structure is imprinted at the surface of the component during the injection molding operation.

10. A component according to any one of the precedent claims, wherein said component is a water tank and at least one internal lateral side wall of the tank presents at least one hydrophobic liquid contact surface portion.

11. A component according to any one of Claims 1 to 9, wherein said component is a tube (41, 431, 44, 45, 46) and at least a part of the internal surface of the tube presents a hydrophobic liquid contact surface.

12. A component according to any one of Claims 1 to 9, wherein said component is a cup holder (42) and at least a part of the external surface of the cup holder presents at least one hydrophobic liquid contact surface portion.

13. A beverage dispensing apparatus (4) comprising at least one component (41, 42, 43, 44, 45, 46, 47) according to any one of Claims 1 to 12.

14. Use of a hydrophobic liquid contact surface portion presenting a micro- and nano-meter hierarchical patterned structure in at least one component for handling a liquid and/or able to be contacted by a liquid of a beverage dispensing apparatus, said structure comprising :
- homogeneously distributed micrometre-sized pillars (1), and
- homogeneously distributed nanometre-sized pillars (2) at the upper surface of the micrometre-sized pillars, and
- nanometre-sized protrusions (3) at the upper surface of the nanometre-sized pillars, said protrusions being positioned in a non-periodic, irregular pattern.

15. Use according to the precedent claim, wherein the micro- and nano-meter hierarchical patterned structure comprises :
- homogeneously distributed micrometre-sized pillars (1) presenting a height of at least 3 µm, preferably comprised between 5 and 50 µm,
- homogeneously distributed nanometre-sized pillars (2) at the upper surface of the micrometre-sized pillars presenting a height comprised between 500 nm and 1000 nm, preferably comprised between 600 and 800 nm, and
- nanometre-sized protrusions (3) at the upper surface of the nanometre-sized pillars presenting a height comprised between 50 and 400 nm.

16. Plastic injection mold for a component, said component being configured according to any one of Claims 1 to 12, wherein said mold comprises a patterned surface for moulding the hydrophobic liquid contact surface portion presenting the micro- and nano-meter hierarchical patterned structure.

## Patentansprüche

1. Komponente (41, 42, 43, 15, 46, 47, 48), die zum Handhaben einer Flüssigkeit konfiguriert ist und/oder in der Lage ist, mit einer Flüssigkeit zur Verwendung in einer Getränkeabgabevorrichtung in Kontakt gebracht zu werden, wobei die Komponente mindestens einen hydrophoben Flüssigkeitskontaktoberflächenabschnitt umfasst, wobei der hydrophobe Flüssigkeitskontaktoberflächenabschnitt eine hierarchische gemusterte Mikro- und Nanostruktur aufweist, wobei die Struktur umfasst:
- homogen verteilte mikrometergroße Säulen (1) und
- homogen verteilte nanometergroße Säulen (2) an der oberen Oberfläche der mikrometergroßen Säulen, und
- nanometergroße Vorsprünge (3) an der oberen Oberfläche der nanometergroßen Säulen, die in einem nicht periodischen, unregelmäßigen Muster positioniert sind.

2. Komponente nach Anspruch 1, wobei die hierarchische gemusterte Mikro- und Nanostruktur umfasst:
- homogen verteilte mikrometergroße Säulen (1), die eine Höhe von mindestens 3 µm, vorzugsweise zwischen 5 und 50 µm, aufweisen,
- homogen verteilte nanometergroße Säulen (2) an der oberen Oberfläche der mikrometergroßen Säulen, die eine Höhe zwischen 500 nm und 1000 nm, vorzugsweise zwischen 600 und 800 nm, aufweisen, und
- nanometergroße Vorsprünge (3) an der oberen Oberfläche der nanometergroßen Säulen, die eine Höhe aufweisen, die zwischen 50 und 400 nm liegt.

3. Komponente nach Anspruch 1 oder 2, wobei die mikrometergroßen Säulen (1) der hierarchischen gemusterten Mikro- und Nanostruktur eine Breite aufweisen, die zwischen 3 und 70 µm, vorzugsweise zwischen 10 und 60 µm, liegt.

4. Komponente nach einem der vorstehenden Ansprüche, wobei die mikrometergroßen Säulen (1) der hierarchischen gemusterten Mikro- und Nanostruktur von den anderen durch ein Rastermaß von höchstens dem 8-Fachen der Breite der Säulen (1) getrennt sind.

5. Komponente nach einem der vorstehenden Ansprüche, wobei die nanometergroßen Säulen (2) der hierarchischen gemusterten Mikro- und Nanostruktur eine Breite aufweisen, die zwischen 400 und 1000 nm, vorzugsweise zwischen 400 und 700 nm, liegt.

6. Komponente nach einem der vorstehenden Ansprüche, wobei die nanometergroßen Säulen (2) der hierarchischen gemusterten Mikro- und Nanostruktur von den anderen durch ein Rastermaß von höchstens dem 6-Fachen der Breite der Säulen (2) getrennt sind.

7. Komponente nach einem der vorstehenden Ansprüche, wobei die mikrometergroßen Säulen (1) parallelepipedförmig oder rund sind.

8. Komponente nach einem der vorstehenden Ansprüche, wobei die nanometergroßen Säulen (2) rund oder Kegelstümpfe sind.

9. Komponente nach einem der vorstehenden Ansprüche, wobei die Komponente aus einem Kunststoffpolymer besteht und durch Spritzgießen hergestellt wird und die hierarchische gemusterte Mikro- und Nanostruktur während des Spritzgießvorgangs auf die Oberfläche der Komponente aufgedruckt wird.

10. Komponente nach einem der vorstehenden Ansprüche, wobei die Komponente ein Wassertank ist und mindestens eine innere seitliche Seitenwand des Tanks mindestens einen hydrophoben Flüssigkeitskontaktoberflächenabschnitt aufweist.

11. Komponente nach einem der Ansprüche 1 bis 9, wobei die Komponente ein Rohr (41, 431, 44, 45, 46) ist und mindestens ein Teil der Innenoberfläche des Rohrs eine hydrophobe Flüssigkeitskontaktoberfläche aufweist.

12. Komponente nach einem der Ansprüche 1 bis 9, wobei die Komponente ein Becherhalter (42) ist und mindestens ein Teil der Außenoberfläche des Becherhalters mindestens einen hydrophoben Flüssigkeitskontaktoberflächenabschnitt aufweist.

13. Getränkeabgabevorrichtung (4), umfassend mindestens eine Komponente (41, 42, 43, 44, 45, 46, 47) nach einem der Ansprüche 1 bis 12.

14. Verwendung eines hydrophoben Flüssigkeitskontaktoberflächenabschnitts, der eine hierarchische gemusterte Mikro- und Nanostruktur in mindestens einer Komponente zum Handhaben einer Flüssigkeit aufweist und/oder in der Lage ist, mit einer Flüssigkeit einer Getränkeabgabeeinrichtung in Kontakt gebracht zu werden, wobei die Struktur umfasst:
- homogen verteilte mikrometergroße Säulen (1) und
- homogen verteilte nanometergroße Säulen (2) an der oberen Oberfläche der mikrometergroßen Säulen, und
- nanometergroße Vorsprünge (3) an der oberen Oberfläche der nanometergroßen Säulen, die in einem nicht periodischen, unregelmäßigen Muster positioniert sind.

15. Verwendung nach dem vorstehenden Anspruch, wobei die hierarchische gemusterte Mikro- und Nanostruktur umfasst:
- homogen verteilte mikrometergroße Säulen (1), die eine Höhe von mindestens 3 µm, vorzugsweise zwischen 5 und 50 µm, aufweisen,
- homogen verteilte nanometergroße Säulen (2) an der oberen Oberfläche der mikrometergroßen Säulen, die eine Höhe zwischen 500 nm und 1000 nm, vorzugsweise zwischen 600 und 800 nm, aufweisen, und
- nanometergroße Vorsprünge (3) an der oberen Oberfläche der nanometergroßen Säulen, die eine Höhe aufweisen, die zwischen 50 und 400 nm liegt.

16. Kunststoff-Spritzgießform für eine Komponente, wobei die Komponente nach einem der Ansprüche 1 bis 12 konfiguriert ist, wobei die Form eine gemusterte Oberfläche zum Formen des hydrophoben Flüssigkeitskontaktoberflächenabschnitts umfasst, der hierarchische gemusterte Mikro- und Nanostruktur aufweist.

## Revendications

1. Composant (41, 42, 43, 15, 46, 47, 48) configuré pour manipuler un liquide et/ou apte à être mis en contact par un liquide pour utilisation dans un appareil de distribution de boisson, ledit composant comprenant au moins une portion de surface hydrophobe de contact de liquide, dans lequel ladite portion de surface hydrophobe de contact de liquide présente une structure hiérarchique micro- et nano-métrique à motifs, ladite structure comprenant :
- des colonnes de taille micrométrique homogènement réparties (1), et
- des colonnes de taille nanométrique homogènement réparties (2) au niveau de la surface supérieure des colonnes de taille micrométrique, et
- des saillies de taille nanométrique (3) au niveau de la surface supérieure des colonnes de taille nanométrique, lesdites saillies étant positionnées dans un motif irrégulier, non périodique.

2. Composant selon la revendication 1, dans lequel la structure hiérarchique micro- et nano-métrique à motifs comprend :
- des colonnes de taille micrométrique homogènement réparties (1) présentant une hauteur d'au moins 3 µm, comprise de préférence entre 5 et 50 µm,
- des colonnes de taille nanométrique homogènement réparties (2) au niveau de la surface supérieure des colonnes de taille micrométrique présentant une hauteur comprise entre 500 nm et 1000 nm, comprise de préférence entre 600 et 800 nm, et
- des saillies de taille nanométrique (3) au niveau de la surface supérieure des colonnes de taille nanométrique présentant une hauteur comprise entre 50 et 400 nm.

3. Composant selon la revendication 1 ou 2, dans lequel les colonnes de taille micrométrique (1) de la structure hiérarchique micro- et nano-métrique à motifs présentent une largeur comprise entre 3 et 70 µm, de préférence entre 10 et 60 µm.

4. Composant selon l'une quelconque des revendications précédentes, les colonnes de taille micrométrique (1) de la structure hiérarchique micro- et nano-métrique à motifs sont séparées les unes des autres par un pas d'au plus 8 fois la largeur desdites colonnes (1).

5. Composant selon l'une quelconque des revendications précédentes, dans lequel les colonnes de taille nanométrique (2) de la structure hiérarchique micro- et nano-métrique à motifs présentent une largeur comprise entre 400 et 1000 nm, de préférence entre 400 et 700 nm.

6. Composant selon l'une quelconque des revendications précédentes, les colonnes de taille nanométrique (2) de la structure hiérarchique micro- et nano-métrique à motifs sont séparées les unes des autres par un pas d'au plus 6 fois la largeur desdites colonnes (2).

7. Composant selon l'une quelconque des revendications précédentes, dans lequel les colonnes de taille micrométrique (1) sont parallélépipédiques ou rondes.

8. Composant selon l'une quelconque des revendications précédentes, dans lequel les colonnes de taille nanométrique (2) sont rondes ou sont des cônes tronqués

9. Composant selon l'une quelconque des revendications précédentes, dans lequel le composant est fabriqué en un polymère plastique et est produit par moulage par injection et la structure hiérarchique micro- et nano-métrique à motifs est imprimée au niveau de la surface du composant pendant l'opération de moulage par injection.

10. Composant selon l'une quelconque des revendications précédentes, dans lequel ledit composant est un réservoir d'eau et au moins une paroi latérale interne du réservoir présente au moins une portion de surface hydrophobe de contact de liquide.

11. Composant selon l'une quelconque des revendications 1 à 9, dans lequel ledit composant est un tube (41, 431, 44, 45, 46) et au moins une partie de la surface interne du tube présente une surface hydrophobe de contact de liquide.

12. Composant selon l'une quelconque des revendications 1 à 9, dans lequel ledit composant est un support de tasse (42) et au moins une partie de la surface externe du support de tasse présente au moins une portion de surface hydrophobe de contact de liquide.

13. Appareil de distribution de boisson (4) comprenant au moins un composant (41, 42, 43, 44, 45, 46, 47) selon l'une quelconque des revendications 1 à 12.

14. Utilisation d'une portion de surface hydrophobe de contact de liquide présentant une structure hiérarchique micro- et nano-métrique à motifs dans au moins un composant pour manipuler un liquide et/ou apte à être mis en contact par un liquide d'un appareil de distribution de boisson, ladite structure comprenant :
- des colonnes de taille micrométrique homogènement réparties (1), et
- des colonnes de taille nanométrique homogènement réparties (2) au niveau de la surface supérieure des colonnes de taille micrométrique, et
- des saillies de taille nanométrique (3) au niveau de la surface supérieure des colonnes de taille nanométrique, lesdites saillies étant positionnées dans un motif irrégulier, non périodique.

15. Utilisation selon la revendication précédente, dans laquelle la structure hiérarchique micro- et nano-métrique à motifs comprend :
- des colonnes de taille micrométrique homogènement réparties (1) présentant une hauteur d'au moins 3 µm, comprise de préférence entre 5 et 50 µm,
- des colonnes de taille nanométrique homogènement réparties (2) au niveau de la surface supérieure des colonnes de taille micrométrique présentant une hauteur comprise entre 500 nm et 1000 nm, de préférence comprise entre 600 et 800 nm, et
- des saillies de taille nanométrique (3) au niveau de la surface supérieure des colonnes de taille nanométrique présentant une hauteur comprise entre 50 et 400 nm.

16. Moule d'injection de plastique pour un composant, ledit composant étant configuré selon l'une quelconque des revendications 1 à 12, dans lequel ledit moule comprend une surface à motifs pour le moulage de la portion de surface hydrophobe de contact de liquide présentant la structure hiérarchique micro- et nano-métrique à motifs.
